# FASCICULE DE BREVET EUROPEEN

(11) **EP 3 288 487 B1**
(45) Date de publication et mention de la délivrance du brevet: **22.07.2020**
(21) Numéro de dépôt: 16721944.3
(22) Date de dépôt: 26.04.2016
(51) Int. Cl.: A61C 5/40, A61C 5/44, A61C 1/00, A61C 1/12

(54) **SYSTÈME ET PROCÉDÉ POUR FORMER DES DENTISTES À DES TECHNIQUES DE TRAITEMENT ENDODONTIQUE.**
SYSTEM UND VERFAHREN ZUR SCHULUNG VON ZAHNÄRZTEN IN ENDODONTISCHEN BEHANDLUNGSTECHNIKEN
SYSTEM AND METHOD FOR TRAINING DENTISTS IN ENDODONTIC TREATMENT TECHNIQUES

(30) Priorité: 29.04.2015 EP 15165561
(43) Date de publication de la demande: 07.03.2018
(73) Titulaire: Dentsply Sirona Inc., York, PA 17401 (US)
(72) Inventeur: PIRAS, Francesco, 1005 Lausanne (CH); KUJAWA, Boris, 1400 Yverdon (CH)
(74) Mandataire: Micheli & Cie SA
(86) Numéro de dépôt international: PCT/IB2016/052351
(87) Numéro de publication internationale: WO 2016/174572

(56) Documents cités:
- EP-A1- 2 567 671
- EP-A1- 2 805 687
- EP-A1- 2 851 034
- EP-A1- 2 851 035
- DE-A1- 19 628 854
- JP-A- H1 097 187
- JP-A- H05 303 327
- US-A1- 2006 154 209
- US-A1- 2007 037 130
- US-A1- 2010 262 145

## Description

La présente invention concerne un système et un procédé pour former des dentistes à des techniques de traitement endodontique.

Les traitements de canaux radiculaires dentaires, appelés traitements endodontiques, sont de plus en plus réalisés par une instrumentation mécanisée. Il y a quelques années, le dentiste faisait appel à une série de limes manuelles, généralement en acier inoxydable, auxquelles il imprimait des mouvements rotatifs en alternance avec des mouvements axiaux. Un système pour former des dentistes à un traitement endodontique utilisant une lime manuelle est décrit dans l'article « Development of a Device for Analyzing Dynamic Characteristics of Root Canal Préparation » de KOTA Kohichi et al. publié en mars 2007 et conservé à la Bibliothèque nationale de la Diète. Outre la lime manuelle, il comprend un modèle de canal radiculaire rectiligne en résine transparente et des capteurs connectés au modèle.

Aujourd'hui, la tendance est d'utiliser, selon une séquence définie, une succession de limes rotatives actionnées par une pièce à main munie d'un moteur et auxquelles le dentiste imprime des mouvements axiaux. Les limes rotatives sont en nickel-titane, matériau extrêmement élastique qui permet une courbure des limes pendant leur utilisation, la courbure pouvant s'adapter à celle du canal radiculaire à traiter. Ces limes rotatives permettent donc de mettre en forme et nettoyer le canal radiculaire en respectant le trajet canalaire originel, dans un minimum de temps et en respectant les principes de base de l'endodontie. La sécurité d'utilisation de ces instruments dépend beaucoup du cas clinique, des conditions d'utilisation et de la formation du dentiste. Des dispositifs de traitement endodontique à lime rotative sont décrits dans les documents EP 2851035, EP 2567671 et EP 2805687. Ces dispositifs sont capables de mesurer le couple de la lime et de modifier la rotation de la lime en fonction du couple mesuré. EP 2567671 montre dans sa figure 3 un graphique représentant l'évolution du couple pendant la préparation d'un canal radiculaire.

Plusieurs techniques de mise en forme du canal radiculaire au moyen de limes rotatives existent, qui impliquent des mouvements différents de la part du dentiste. On connaît par exemple les techniques de va-et-vient (en anglais : « pecking ») ou de brossage (en anglais : « brushing »). Pour être capable d'appliquer efficacement ces techniques, il est essentiel que le dentiste soit bien formé. La présente invention vise à apporter une aide à la formation des dentistes.

A cette fin, il est proposé selon un premier mode de réalisation de l'invention un système endodontique comprenant :
- une pièce à main à laquelle peut être connecté un instrument endodontique destiné à être inséré dans un canal radiculaire,
- une unité de mesure, située dans la pièce à main, pour mesurer au moins une grandeur liée à la position de l'instrument endodontique dans le canal radiculaire,
- une unité de calcul et d'affichage pour afficher au moins un graphique représentant l'évolution de ladite au moins une grandeur mesurée par l'unité de mesure au cours d'un traitement endodontique, ou d'une simulation de traitement endodontique, avec l'instrument endodontique, cette unité de calcul et d'affichage étant en outre configurée pour afficher au moins un graphique de référence représentatif d'au moins une technique de traitement endodontique prédéterminée.

Selon un deuxième mode de réalisation de l'invention, il est proposé un système endodontique comprenant :
- une pièce à main à laquelle peut être connecté un instrument endodontique destiné à être inséré dans un canal radiculaire,
- une unité de mesure, située dans la pièce à main, pour mesurer au moins une grandeur liée à la position de l'instrument endodontique dans le canal radiculaire,
- une unité de calcul et d'affichage pour afficher au moins un graphique représentant l'évolution de ladite au moins une grandeur mesurée par l'unité de mesure au cours d'un traitement endodontique, ou d'une simulation de traitement endodontique, avec l'instrument endodontique,
- une deuxième unité de calcul et d'affichage pour afficher au moins un graphique de référence représentatif d'au moins une technique de traitement endodontique prédéterminée.

La présente invention repose sur la constatation que les différentes techniques de mise en forme canalaire peuvent être caractérisées par des graphiques de référence. Ces graphiques de référence correspondent à des variations jugées idéales d'une grandeur déterminée liée à la position de l'instrument endodontique dans le canal radiculaire en fonction du temps. Ainsi, à la fin du traitement endodontique, le dentiste peut comparer le graphique affiché par l'unité de calcul et d'affichage à un graphique de référence pour évaluer si la technique de traitement endodontique choisie a été correctement mise en œuvre.

Le graphique de l'évolution de la grandeur mesurée par l'unité de mesure peut être affiché après le traitement endodontique et/ou en temps réel pendant le traitement endodontique. L'unité de calcul et d'affichage peut communiquer avec l'unité de mesure directement, ou indirectement via un contrôleur situé dans la pièce à main ou associé à la pièce à main. Le graphique de l'évolution de la grandeur mesurée peut être généré, par exemple, par l'unité de calcul et d'affichage elle-même ou par un tel contrôleur. Avant l'affichage du graphique de son évolution, la grandeur mesurée peut être traitée et/ou calibrée, par exemple par l'unité de mesure, le contrôleur et/ou l'unité de calcul et d'affichage. En particulier, un ou plusieurs facteurs multiplicatifs ou additifs peuvent être appliqués à la grandeur mesurée.

Avantageusement, l'unité de calcul et d'affichage est apte à communiquer directement avec la pièce à main par une liaison sans fil.

L'unité de calcul et d'affichage est par exemple une tablette numérique.

Typiquement, la pièce à main comprend un moteur pour entraîner l'instrument endodontique en rotation.

L'unité de calcul et d'affichage peut être configurée pour pouvoir paramétrer le moteur.

Dans le premier mode de réalisation, l'unité de calcul et d'affichage peut aussi être configurée pour mémoriser l'au moins un graphique de référence représentatif d'au moins une technique de traitement endodontique prédéterminée.

Dans le deuxième mode de réalisation, la deuxième unité de calcul et d'affichage peut aussi être configurée pour mémoriser l'au moins un graphique de référence représentatif d'au moins une technique de traitement endodontique prédéterminée.

De préférence, lesdits graphiques sont des courbes.

Dans des modes de réalisation particuliers, l'unité de mesure comprend au moins l'un des éléments suivants : un capteur de couple pour mesurer le couple de l'instrument endodontique, un détecteur d'apex pour mesurer la position de l'instrument endodontique par rapport à l'apex du canal radiculaire, un accéléromètre pour détecter les mouvements de la pièce à main, un capteur de pression pour mesurer la pression entre l'instrument endodontique et la pièce à main.

La présente invention propose également un procédé d'aide à la formation d'un dentiste à une technique de traitement endodontique prédéterminée, comprenant les étapes suivantes :
- afficher au moyen d'une unité de calcul et d'affichage au moins un graphique représentant l'évolution d'au moins une grandeur mesurée par une unité de mesure au cours d'une simulation d'un traitement d'un canal radiculaire effectuée par le dentiste hors d'un corps humain ou animal au moyen d'un instrument endodontique connecté à une pièce à main dans laquelle est située l'unité de mesure, ladite au moins une grandeur étant liée à la position de l'instrument endodontique dans le canal radiculaire ; et
- mettre à disposition au moins un graphique de référence représentatif de la technique de traitement endodontique prédéterminée, pour permettre une comparaison entre ledit au moins un graphique représentant l'évolution d'au moins une grandeur mesurée et ledit au moins un graphique de référence.

Ledit au moins un graphique de référence peut être affiché par l'unité de calcul et d'affichage ou par une deuxième unité de calcul et d'affichage distincte de ladite unité de calcul et d'affichage.

De préférence, lesdits graphiques sont des courbes.

Dans des modes de réalisation particuliers, ladite au moins une grandeur comprend au moins l'une des grandeurs suivantes : le couple de l'instrument endodontique, la position de l'instrument endodontique par rapport à l'apex du canal radiculaire, la position de la pièce à main telle que mesurée par un accéléromètre, la pression exercée entre l'instrument endodontique et la pièce à main.

D'autres caractéristiques et avantages de la présente invention apparaîtront à la lecture de la description détaillée suivante faite en référence aux dessins annexés dans lesquels :
- la figure 1 montre un système endodontique selon la présente invention ;
- la figure 2 est un bloc-diagramme illustrant le fonctionnement d'une pièce à main faisant partie du système endodontique représenté à la figure 1 ;
- les figures 3 à 7 sont des pages d'écran affichées sur une unité de calcul et d'affichage du système endodontique représenté à la figure 1 ;
- les figures 8 et 9 sont des exemples de courbes de référence pour deux techniques de traitement endodontique particulières.

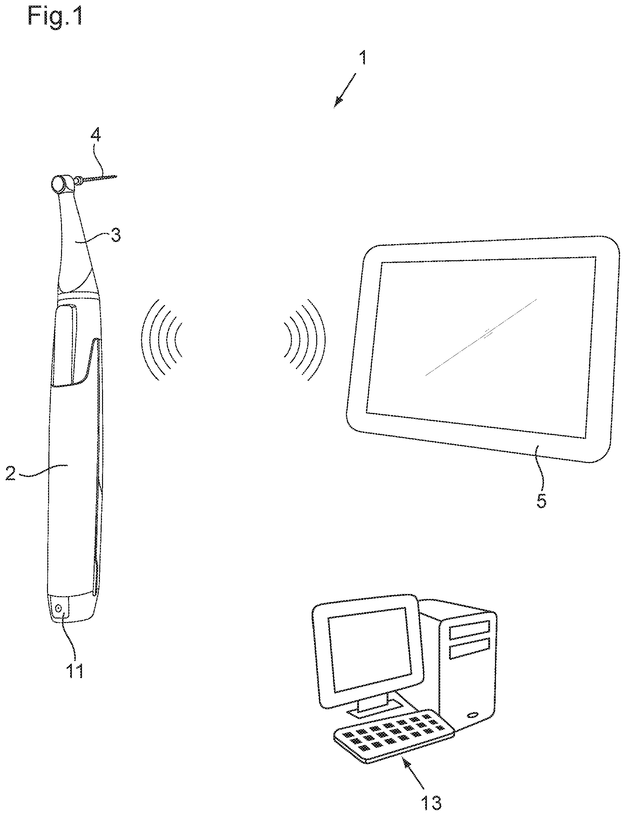

La figure 1 montre un système endodontique 1 selon l'invention. Ce système comprend une pièce à main sans fil 2 à laquelle peut être connecté, ou dont fait partie, un contre-angle 3 apte à recevoir lui-même un instrument endodontique 4, typiquement une lime rotative. Le système 1 comprend aussi une unité de calcul et d'affichage 5. Cette unité de calcul et d'affichage 5 se présente de préférence, comme illustré, sous la forme d'une tablette numérique tactile telle qu'un iPad®, mais en variante elle peut être sous une autre forme, par exemple sous la forme d'un micro-ordinateur ou d'un smartphone. Le système 1 peut en outre comprendre un support (non représenté) sur lequel la pièce à main 2 peut être posée lorsqu'elle n'est pas utilisée.

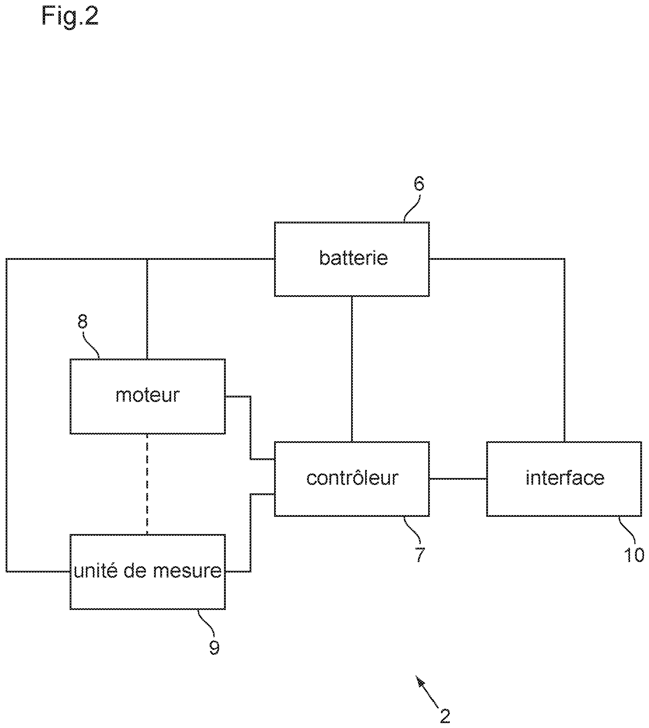

A l'intérieur de la pièce à main 2 se trouvent (cf. figure 2) une batterie 6, un contrôleur 7, un moteur 8, une unité de mesure 9 et une interface de communication sans fil 10 telle qu'une interface Bluetooth®. La batterie 6 alimente le contrôleur 7, le moteur 8, l'unité de mesure 9 et l'interface 10 et peut être rechargée en reliant la pièce à main 2 à un chargeur par exemple au moyen d'une liaison filaire. Le contrôleur 7 gère le fonctionnement du moteur 8, de manière connue en soi, pour faire tourner l'instrument endodontique 4, et est relié à l'interface de communication sans fil 10 pour communiquer avec l'unité de calcul et d'affichage 5. L'unité de mesure 9 mesure une grandeur liée à la position axiale de l'instrument endodontique 4 dans le canal radiculaire, et fournit les données de mesure au contrôleur 7 qui lui-même peut les communiquer à l'unité de calcul et d'affichage 5. La grandeur mesurée par l'unité de mesure 9 est par exemple le couple de l'instrument endodontique 4 (le couple dépend de la position de l'instrument endodontique 4 dans le canal radiculaire ; il est plus élevé près de l'apex qu'à l'entrée du canal), la position de la pointe de l'instrument endodontique 4 par rapport à l'apex du canal radiculaire (l'unité de mesure 9 étant dans ce cas un détecteur d'apex), la position de la pièce à main 2 telle que mesurée par un accéléromètre constituant l'unité de mesure 9 ou la pression exercée sur l'instrument endodontique 4 telle que mesurée par un capteur de pression situé entre la pièce à main 2 et l'instrument endodontique 4 et constituant l'unité de mesure 9. Par souci de simplification, dans la suite de cette description l'unité de mesure 9 sera un capteur de couple mesurant le couple de l'instrument endodontique 4. Par « couple de l'instrument endodontique » on entend le couple proprement dit de l'instrument endodontique 4 ou toute grandeur liée à ce couple par une relation mathématique prédéterminée, par exemple le couple du moteur 8 qui est proportionnel au couple proprement dit de l'instrument endodontique 4.

L'unité de calcul et d'affichage 5 contient et exécute un logiciel permettant de régler et visualiser les paramètres du moteur 8 et d'afficher les données de mesure du couple. Différentes données sont stockées dans une mémoire de l'unité de calcul et d'affichage 5 et peuvent être utilisées par le logiciel, notamment :
- des premières données relatives à un ensemble prédéfini de limes,
- des deuxièmes données relatives à des séquences prédéfinies de limes,
- des troisièmes données relatives à des traitements déjà effectués sur des patients.

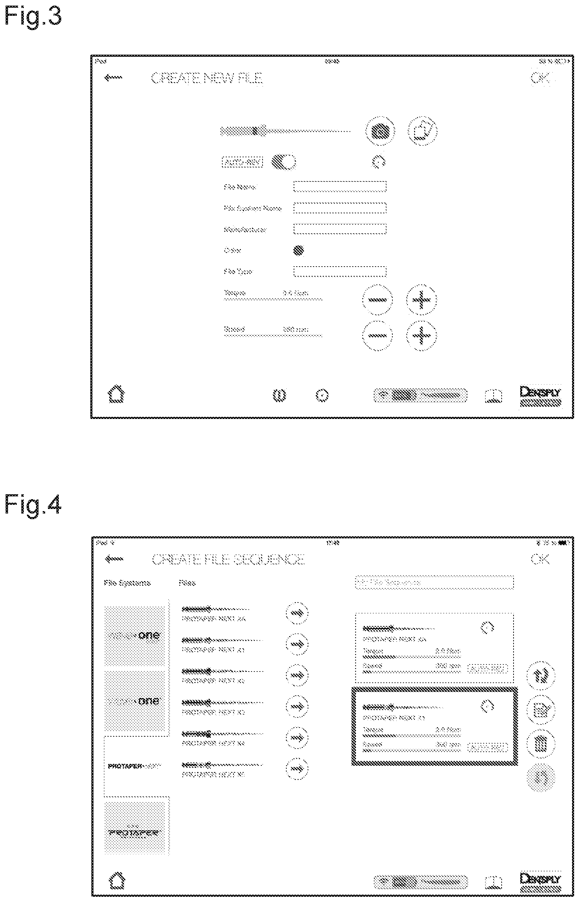

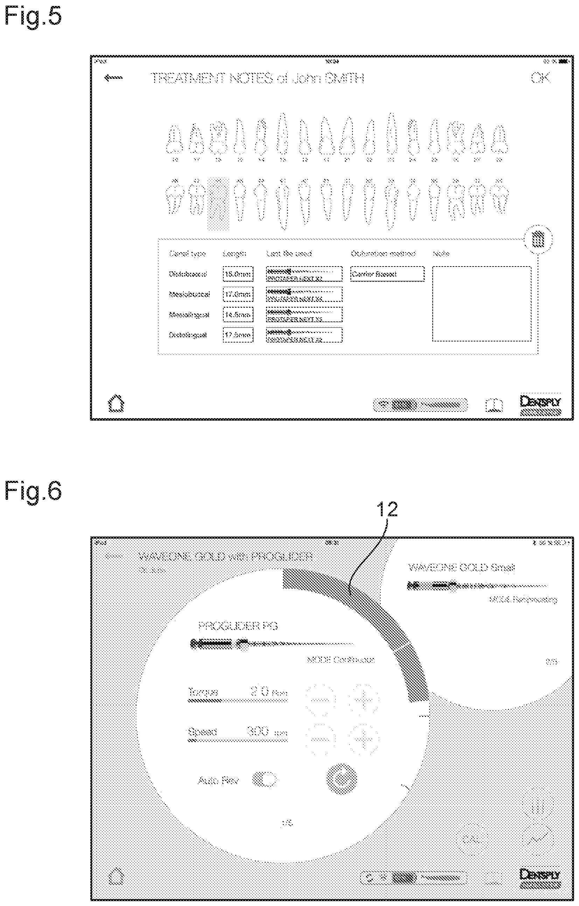

Le dentiste peut lui-même programmer ces données dans l'unité de calcul et d'affichage 5. La figure 3 montre une page d'écran au moyen de laquelle le dentiste peut saisir des données relatives à une nouvelle lime, telles que son nom, son type, le couple maximal qu'elle est capable de supporter et la vitesse à laquelle elle doit être actionnée, données qui seront ajoutées auxdites premières données. La figure 4 montre une page d'écran au moyen de laquelle le dentiste peut programmer une séquence de limes pour un traitement endodontique, qui sera ajoutée auxdites deuxièmes données. La figure 5 montre une page d'écran permettant au dentiste de saisir des informations sur le dernier traitement endodontique mis en œuvre sur un patient donné, pour compléter lesdites troisièmes données.

De la sorte, le dentiste peut choisir une séquence de limes sur l'unité de calcul et d'affichage 5 et faire envoyer par cette dernière les données correspondantes à la pièce à main 2. Le contrôleur 7 règle alors les paramètres du moteur 8 en fonction de la première lime de la séquence. Le dentiste connecte ladite première lime à la pièce à main 2 par l'intermédiaire du contre-angle 3 et peut procéder à une première phase du traitement endodontique avec cette lime. Puis, le dentiste remplace la première lime par la deuxième lime de la séquence et appuie sur un bouton 11 prévu sur la pièce à main 2 pour informer le contrôleur 7 du changement de lime. Le contrôleur 7 modifie les paramètres du moteur 8 pour les adapter à la deuxième lime. Le dentiste procède à la deuxième phase du traitement à l'aide de la deuxième lime puis passe à la troisième lime de la séquence, et ainsi de suite.

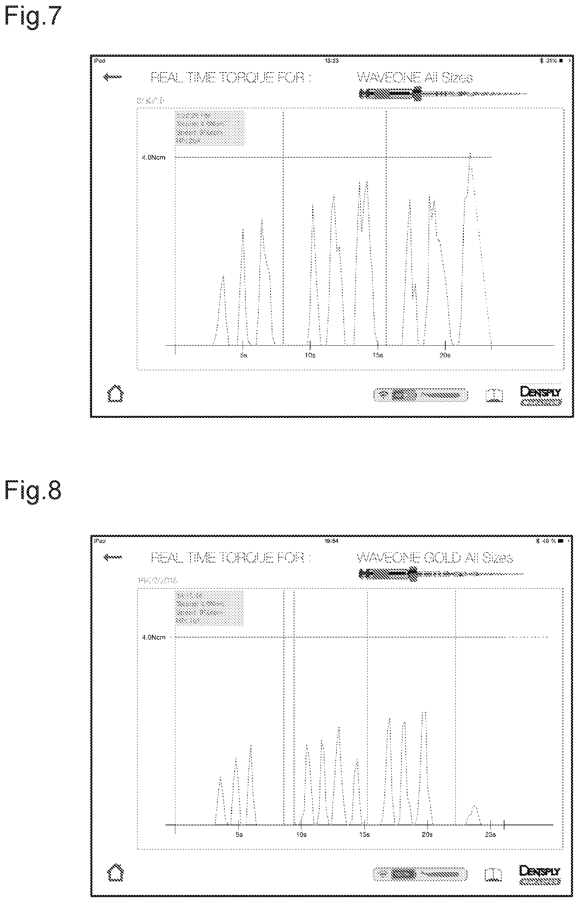

Pendant chaque passage de lime dans le canal radiculaire du patient, le contrôleur 7 envoie les données de mesure de l'unité de mesure 9 à l'unité de calcul et d'affichage 5 qui les affiche en temps réel sous la forme par exemple d'un bandeau en arc de cercle 12 de longueur variable, comme représenté à la figure 6. Ce bandeau 12 indique ainsi le couple instantané de la lime. Les données de mesure de l'unité de mesure 9 sont stockées dans l'unité de calcul et d'affichage 5, qui génère et mémorise une courbe représentative de l'évolution du couple en fonction du temps. A la fin du traitement endodontique le dentiste peut visualiser les courbes respectives correspondant aux différents passages de limes. Un exemple d'une de ces courbes est représenté à la figure 7. Les différents pics représentent les mouvements axiaux de la pièce à main 2, et donc de l'instrument endodontique 4, imprimés par le dentiste. Ces courbes peuvent aussi être envoyées sous la forme d'un rapport à l'adresse électronique du dentiste via Internet par l'unité de calcul et d'affichage 5. Dans une variante, chaque courbe pourrait aussi être affichée en temps réel pendant le passage de lime dans le canal radiculaire en remplacement ou en plus du bandeau 12.

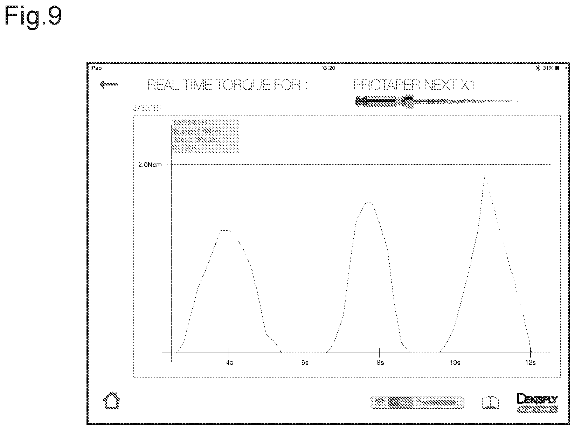

Lors de la visualisation de ces courbes, le dentiste peut les comparer à des courbes de référence, c'est-à-dire des courbes pouvant être considérées comme idéales. A titre d'illustration, la figure 8 montre une courbe de référence pour la technique de va-et-vient (pecking) et la figure 9 montre une courbe de référence pour la technique de brossage (brushing). En comparant une courbe donnée générée par l'unité de calcul et d'affichage 5 avec la courbe de référence correspondant à la technique endodontique appliquée, plus précisément en comparant les caractéristiques de ces courbes telles que le nombre, la hauteur et l'espacement de leurs pics, le dentiste peut identifier les gestes à améliorer pour les prochains traitements et ainsi se perfectionner dans ladite technique.

Les courbes de référence sont mises à disposition du dentiste, par exemple sur un site Internet. Le dentiste peut ainsi afficher ces courbes de référence sur l'unité de calcul et d'affichage 5 ou sur une autre unité de calcul et d'affichage 13, qui peut elle aussi être une tablette numérique, un micro-ordinateur (comme représenté à la figure 1) ou un smartphone par exemple. Le dentiste peut en outre mémoriser ces courbes de référence dans l'unité de calcul et d'affichage 5 et/ou dans l'autre unité de calcul et d'affichage 13. Il peut par ailleurs afficher la courbe issue des données produites par l'unité de mesure 9 et la courbe de référence correspondante simultanément sur l'écran de l'unité de calcul et d'affichage 5 pour faciliter leur comparaison.

Bien que dans l'invention décrite ci-dessus la pièce à main 2 soit sans fil et communique ainsi directement avec l'unité de calcul et d'affichage 5, la présente invention n'exclut pas, par exemple, que le contrôleur 7 soit placé à l'extérieur de la pièce à main 2 et qu'il communique par une liaison filaire avec la pièce à main 2 et par une liaison sans fil ou une liaison filaire avec l'unité de calcul et d'affichage 5. La présente invention n'exclut pas non plus que le contrôleur 7 et l'unité de calcul et d'affichage 5 soient réunis dans un même appareil ou que l'unité de mesure 9 soit située hors de la pièce à main 2. En outre, l'affichage du couple ou de toute autre grandeur mesuré par l'unité de mesure 9 peut se présenter sous la forme d'un autre type de graphique qu'une courbe, par exemple un histogramme. Il peut également être envisagé de mesurer plusieurs grandeurs liées à la position de l'instrument endodontique 4 dans le canal radiculaire, telles que le couple, la position par rapport à l'apex, la position de la pièce à main et la pression entre l'instrument endodontique et la pièce à main, et d'afficher les graphiques correspondants ainsi que les graphiques de référence correspondants pour permettre au dentiste d'affiner son analyse. De plus, la présente invention peut s'appliquer à d'autres types d'instruments endodontiques qu'une lime rotative, par exemple à des instruments à ultrasons. Dans ce dernier cas, bien entendu, l'instrument endodontique n'est pas soumis à un couple, mais les autres exemples de grandeurs mentionnés plus haut sont valables.

On notera également que le système endodontique selon l'invention peut être utilisé dans le cadre de simulations de traitements endodontiques pratiquées à titre d'entraînement hors du corps sur des dents extraites de patients ou de cadavres ou sur des modèles de dents physiques (en plastique ou autre) comprenant un ou des canaux imitant un ou des canaux radiculaires naturels, par exemple.

## Revendications

1. Système endodontique comprenant :
- une pièce à main (2) à laquelle peut être connecté un instrument endodontique (4) destiné à être inséré dans un canal radiculaire,
- une unité de mesure (9), située dans la pièce à main (2), pour mesurer au moins une grandeur liée à la position de l'instrument endodontique (4) dans le canal radiculaire,
- une unité de calcul et d'affichage (5) pour afficher au moins un graphique représentant l'évolution de ladite au moins une grandeur mesurée par l'unité de mesure (9) au cours d'un traitement endodontique, ou d'une simulation de traitement endodontique, avec l'instrument endodontique (4), cette unité de calcul et d'affichage (5) étant en outre configurée pour afficher au moins un graphique de référence représentatif d'au moins une technique de traitement endodontique prédéterminée.

2. Système endodontique comprenant :
- une pièce à main (2) à laquelle peut être connecté un instrument endodontique (4) destiné à être inséré dans un canal radiculaire,
- une unité de mesure (9), située dans la pièce à main (2), pour mesurer au moins une grandeur liée à la position de l'instrument endodontique (4) dans le canal radiculaire,
- une unité de calcul et d'affichage (5) pour afficher au moins un graphique représentant l'évolution de ladite au moins une grandeur mesurée par l'unité de mesure (9) au cours d'un traitement endodontique, ou d'une simulation de traitement endodontique, avec l'instrument endodontique (4),
- une deuxième unité de calcul et d'affichage (13) pour afficher au moins un graphique de référence représentatif d'au moins une technique de traitement endodontique prédéterminée.

3. Système endodontique selon la revendication 1, dans lequel l'unité de calcul et d'affichage (5) est en outre configurée pour mémoriser ledit au moins un graphique de référence.

4. Système endodontique selon la revendication 2, dans lequel la deuxième unité de calcul et d'affichage (13) est en outre configurée pour mémoriser ledit au moins un graphique de référence.

5. Système endodontique selon l'une quelconque des revendications 1 à 4, dans lequel l'unité de calcul et d'affichage (5) est apte à communiquer directement avec la pièce à main (2) par une liaison sans fil.

6. Système endodontique selon l'une quelconque des revendications 1 à 5, dans lequel l'unité de calcul et d'affichage (5) est une tablette numérique.

7. Système endodontique selon l'une quelconque des revendications 1 à 6, dans lequel la pièce à main (2) comprend un moteur (8) pour entraîner l'instrument endodontique (4) en rotation.

8. Système endodontique selon la revendication 7, dans lequel l'unité de calcul et d'affichage (5) est configurée pour pouvoir paramétrer le moteur (8).

9. Système endodontique selon l'une quelconque des revendications 1 à 8, dans lequel les graphiques sont des courbes.

10. Système endodontique selon l'une quelconque des revendications 1 à 9, dans lequel l'unité de mesure (9) comprend un capteur de couple pour mesurer le couple de l'instrument endodontique (4) et/ou un capteur de pression pour mesurer la pression entre l'instrument endodontique (4) et la pièce à main (2).

11. Système endodontique selon l'une quelconque des revendications 1 à 10, dans lequel l'unité de mesure (9) comprend un détecteur d'apex pour mesurer la position de l'instrument endodontique (4) par rapport à l'apex du canal radiculaire et/ou un accéléromètre pour détecter les mouvements de la pièce à main (2).

12. Procédé d'aide à la formation d'un dentiste à une technique de traitement endodontique prédéterminée, comprenant les étapes suivantes :
- afficher au moyen d'une unité de calcul et d'affichage (5) au moins un graphique représentant l'évolution d'au moins une grandeur mesurée par une unité de mesure (9) au cours d'une simulation d'un traitement d'un canal radiculaire effectuée par le dentiste hors d'un corps humain ou animal au moyen d'un instrument endodontique (4) connecté à une pièce à main (2) dans laquelle est située l'unité de mesure (9), ladite au moins une grandeur étant liée à la position de l'instrument endodontique (4) dans le canal radiculaire ;
- mettre à disposition au moins un graphique de référence représentatif de la technique de traitement endodontique prédéterminée, pour permettre une comparaison entre ledit au moins un graphique représentant l'évolution d'au moins une grandeur mesurée et ledit au moins un graphique de référence.

13. Procédé selon la revendication 12, dans lequel ledit au moins un graphique de référence est affiché par l'unité de calcul et d'affichage (5).

14. Procédé selon la revendication 12, dans lequel ledit au moins un graphique de référence est affiché par une deuxième unité de calcul et d'affichage (13) distincte de ladite unité de calcul et d'affichage (5).

15. Procédé selon l'une quelconque des revendications 12 à 14, dans lequel lesdits graphiques sont des courbes.

16. Procédé selon l'une quelconque des revendications 12 à 15, dans lequel ladite au moins une grandeur comprend au moins l'une des grandeurs suivantes : le couple de l'instrument endodontique (4), la position de l'instrument endodontique (4) par rapport à l'apex du canal radiculaire, la position de la pièce à main (2) telle que mesurée par un accéléromètre, la pression exercée entre l'instrument endodontique (4) et la pièce à main (2).

## Patentansprüche

1. Endodontisches System, das umfasst:
- ein Handstück (2), mit dem ein endodontisches Instrument (4) verbunden werden kann, das dazu bestimmt ist, in einen Wurzelkanal eingeführt zu werden,
- eine Messeinheit (9), die sich in dem Handstück (2) befindet, um mindestens eine Größe zu messen, die mit der Position des endodontischen Instruments (4) in dem Wurzelkanal verbunden ist,
- eine Rechen- und Anzeigeeinheit (5) zum Anzeigen von mindestens einer Grafik, die die Entwicklung der durch die Messeinheit (9) während einer endodontischen Behandlung oder einer Simulation einer endodontischen Behandlung mit dem endodontischen Instrument (4) gemessenen Größe darstellt, wobei diese Rechen- und Anzeigeeinheit (5) ferner ausgestaltet ist, um mindestens eine Bezugsgrafik anzuzeigen, die für mindestens eine vorbestimmte endodontische Behandlungstechnik repräsentativ ist.

2. Endodontisches System, das umfasst:
- ein Handstück (2), mit dem ein endodontisches Instrument (4) verbunden werden kann, das dazu bestimmt ist, in einen Wurzelkanal eingeführt zu werden,
- eine Messeinheit (9), die sich in dem Handstück (2) befindet, um mindestens eine Größe zu messen, die mit der Position des endodontischen Instruments (4) in dem Wurzelkanal verbunden ist,
- eine Rechen- und Anzeigeeinheit (5) zum Anzeigen von mindestens einer Grafik, die die Entwicklung der durch die Messeinheit (9) während einer endodontischen Behandlung oder einer Simulation einer endodontischen Behandlung mit dem endodontischen Instrument (4) gemessenen Größe darstellt,
- eine zweite Rechen- und Anzeigeeinheit (13) zum Anzeigen von mindestens einer Bezugsgrafik, die für mindestens eine vorbestimmte endodontische Behandlungstechnik repräsentativ ist.

3. Endodontisches System nach Anspruch 1, wobei die Rechen- und Anzeigeeinheit (5) ferner ausgestaltet ist, um die mindestens eine Bezugsgrafik zu speichern.

4. Endodontisches System nach Anspruch 2, wobei die zweite Rechen- und Anzeigeeinheit (13) ferner ausgestaltet ist, um die mindestens eine Bezugsgrafik zu speichern.

5. Endodontisches System nach einem der Ansprüche 1 bis 4, wobei die Rechen- und Anzeigeeinheit (5) geeignet ist, direkt durch eine drahtlose Verbindung mit dem Handteil (2) zu kommunizieren.

6. Endodontisches System nach einem der Ansprüche 1 bis 5, wobei die Rechen- und Anzeigeeinheit (5) ein digitales Tablet ist.

7. Endodontisches System nach einem der Ansprüche 1 bis 6, wobei das Handteil (2) einen Motor (8) zum drehbaren Antreiben des endodontischen Instruments (4) umfasst.

8. Endodontisches System nach Anspruch 7, wobei die Rechen- und Anzeigeeinheit (5) ausgestaltet ist, um den Motor (8) parametrisieren zu können.

9. Endodontisches System nach einem der Ansprüche 1 bis 8, wobei die Grafiken Kurven sind.

10. Endodontisches System nach einem der Ansprüche 1 bis 9, wobei die Messeinheit (9) einen Drehmomentsensor zum Messen des Drehmoments des endodontischen Instruments (4) und/oder einen Drucksensor zum Messen des Drucks zwischen dem endodontischen System (4) und dem Handteil (2) umfasst.

11. Endodontisches System nach einem der Ansprüche 1 bis 10, wobei die Messeinheit (9) einen Spitzendetektor zum Messen der Position des endodontischen Instruments (4) in Bezug auf die Spitze des Wurzelkanals und/oder einen Beschleunigungsmesser zum Detektieren der Bewegungen des Handteils (2) umfasst.

12. Verfahren zur Hilfe bei der Schulung von Zahnärzten in einer vorbestimmten endodontischen Behandlungstechnik, das die folgenden Schritte umfasst:
- mittels einer Rechen- und Anzeigeeinheit (5), Anzeigen von mindestens einer Grafik, die die Entwicklung von mindestens einer Größe darstellt, die durch eine Messeinheit (9) während einer Simulation einer Behandlung eines Wurzelkanals gemessen wird, die durch den Zahnarzt außerhalb eines menschlichen oder tierischen Körpers mittels eines endodontischen Instruments (4) durchgeführt wird, das mit einem Handteil (2) verbunden ist, in dem sich die Messeinheit (9) befindet, wobei die mindestens eine Größe mit der Position des endodontischen Instruments (4) in dem Wurzelkanal verbunden ist;
- Zurverfügungstellen mindestens einer Bezugsgrafik, die für die vorbestimmte endodontische Behandlungstechnik repräsentativ ist, um einen Vergleich zwischen der mindestens einen Grafik, die die Entwicklung der mindestens einen gemessenen Größe darstellt, und der mindestens einen Bezugsgrafik zu ermöglichen.

13. Verfahren nach Anspruch 12, wobei die mindestens eine Bezugsgrafik durch die Rechen- und Anzeigeeinheit (5) angezeigt wird.

14. Verfahren nach Anspruch 12, wobei die mindestens eine Bezugsgrafik durch eine zweite Rechen- und Anzeigeeinheit (13) angezeigt wird, die sich von der Rechen- und Anzeigeeinheit (5) unterscheidet.

15. Verfahren nach einem der Ansprüche 12 bis 14, wobei die Grafiken Kurven sind.

16. Verfahren nach einem der Ansprüche 12 bis 15, wobei die mindestens eine Größe mindestens eine von den folgenden Größen umfasst: das Drehmoment des endodontischen Instruments (4), die Position des endodontischen Instruments (4) in Bezug auf die Spitze des Wurzelkanals, die Position des Handteils (2) wie durch einen Beschleunigungsmesser gemessen, den zwischen dem endodontischen Instrument (4) und dem Handteil (2) ausgeübten Druck.

## Claims

1. Endodontic system comprising:
- a handpiece (2), to which an endodontic instrument (4) can be connected that is intended to be inserted into a root canal;
- a measurement unit (9), located in the handpiece (2), for measuring at least one magnitude related to the position of the endodontic instrument (4) in the root canal;
- a computation and display unit (5) for displaying at least one graph representing the evolution of said at least one magnitude measured by the measurement unit (9) during an endodontic treatment, or a simulation of endodontic treatment, with the endodontic instrument (4), this computation and display unit (5) being further configured to display at least one reference graph representing at least one predetermined endodontic treatment technique.

2. Endodontic system comprising:
- a handpiece (2), to which an endodontic instrument (4) can be connected that is intended to be inserted into a root canal;
- a measurement unit (9), located in the handpiece (2), for measuring at least one magnitude related to the position of the endodontic instrument (4) in the root canal;
- a computation and display unit (5) for displaying at least one graph representing the evolution of said at least one magnitude measured by the measurement unit (9) during an endodontic treatment, or a simulation of endodontic treatment, with the endodontic instrument (4),
- a second computation and display unit (13) for displaying at least one reference graph representing at least one predetermined endodontic treatment technique.

3. Endodontic system according to claim 1, wherein the computation and display unit (5) is further configured to store said at least one reference graph.

4. Endodontic system according to claim 2, wherein the second computation and display unit (13) is further configured to store said at least one reference graph.

5. Endodontic system according to any one of claims 1 to 4, wherein the computation and display unit (5) is capable of communicating directly with the handpiece (2) via a wireless connection.

6. Endodontic system according to any one of claims 1 to 5, wherein the computation and display unit (5) is a tablet computer.

7. Endodontic system according to any one of claims 1 to 6, wherein the handpiece (2) comprises a motor (8) for rotating the endodontic instrument (4).

8. Endodontic system according to claim 7, wherein the computation and display unit (5) is configured to be able to set parameters of the motor (8).

9. Endodontic system according to any one of claims 1 to 8, wherein the graphs are curves.

10. Endodontic system according to any one of claims 1 to 9, wherein the measurement unit (9) comprises a torque sensor for measuring the torque of the endodontic instrument (4) and/or a pressure sensor for measuring the pressure between the endodontic instrument (4) and the handpiece (2).

11. Endodontic system according to any one of claims 1 to 10, wherein the measurement unit (9) comprises an apex detector for measuring the position of the endodontic instrument (4) relative to the apex of the root canal and/or an accelerometer for detecting the movements of the handpiece (2).

12. Method for assisting the training of a dentist in a predetermined endodontic treatment technique, comprising the following steps:
- displaying, by means of a computation and display unit (5), at least one graph representing the evolution of at least one magnitude measured by a measurement unit (9) during a simulation of a root canal treatment performed by the dentist outside of a human or animal body by means of an endodontic instrument (4) connected to a handpiece (2) in which the measurement unit (9) is located, said at least one magnitude being related to the position of the endodontic instrument (4) in the root canal;
- providing at least one reference graph representing the predetermined endodontic treatment technique to allow a comparison to be made between said at least one graph representing the evolution of at least one measured magnitude and said at least one reference graph.

13. Method according to claim 12, wherein said at least one reference graph is displayed by the computation and display unit (5).

14. Method according to claim 12, wherein said at least one reference graph is displayed by a second computation and display unit (13) distinct from said computation and display unit (5).

15. Method according to any one of claims 12 to 14, wherein said graphs are curves.

16. Method according to any one of claims 12 to 15, wherein said at least one magnitude comprises at least one of the following magnitudes: the torque of the endodontic instrument (4), the position of the endodontic instrument (4) relative to the apex of the root canal, the position of the handpiece (2) as measured by an accelerometer, the pressure exerted between the endodontic instrument (4) and the handpiece (2).
